# NEUE EUROPÄISCHE PATENTSCHRIFT

(11) **EP 1 543 916 B2**
(45) Veröffentlichungstag und Bekanntmachung des Hinweises auf die Entscheidung über den Einspruch: **06.04.2011**
(45) Hinweis auf die Patenterteilung: 27.12.2006
(21) Anmeldenummer: 04106611.9
(22) Anmeldetag: 15.12.2004
(51) Int. Cl.: B23Q 1/25, B23Q 1/28, B23Q 1/50

(54) **Werkstücktisch**
Worktable
Table porte-pièce

(30) Priorität: 15.12.2003 DE 10358943
(43) Veröffentlichungstag der Anmeldung: 22.06.2005
(73) Patentinhaber: Fertigungstechnik Weissenfels GmbH, 06667 Weissenfels (DE)
(72) Erfinder: Burkhardt, Dipl.-Ing. Carsten, 06618 Wethau (DE); Markus, Dipl.-Ing. (TU) Hartmut, 06667 Weissenfels (DE)
(74) Vertreter: Hengelhaupt, Jürgen

(56) Entgegenhaltungen:
- EP-A2- 1 088 616
- DE-A1- 2 628 677
- DE-A1- 4 009 165
- DE-A1- 4 214 947
- DE-A1- 19 515 085
- DE-U1- 20 202 998
- US-A- 3 786 721
- US-B1- 6 457 383

## Beschreibung

Die betrifft einen Werkstücktisch mit einem Gehäuse und einem drehbar an dem Gehäuse gelagerten Drehelement sowie einer Arretiereinrichtung zum Fixieren der jeweiligen Drehwinkellage des Drehelementes gegenüber dem Gehäuse, welche bei eingeschalteter Energieversorgung mittels eines ersten Betätigungsorgans gelöst und bei abgeschalteter Energieversorgung mittels eines Rückholorgans aktiviert ist.

Ein solcher Werkstücktisch ist aus der DE 103 19 139 A1 bekannt.

In der DE 202 02 998 U1 ist ein Werkstücktisch offenbart, welcher einen drehbar an einem Gehäuse, in der Schrift als Unterbau bezeichnet, gelagerten Rundtisch aufweist. Auf dem Rundtisch werden Werkstücke in üblicher Weise gespannt, um sie, insbesondere spanend, zu bearbeiten. Der Rundtisch stellt demnach eine drehbar am Gehäuse angeordnete Werkstückaufnahme dar. Die auf dem Rundtische gespannten Werkstücke lassen sich mittels des durch einen Drehantrieb angeriebenen Rundtisches in vorbestimmte, für den jeweiligen Bearbeitungsschritt günstige Positionen drehen und sodann bearbeiten.

Beim Bearbeiten der Werkstücke, insbesondere durch Fräsen, Hobeln oder dergleichen, treten erhebliche Kräfte auf das Werkstück auf, welche über den Rundtisch abgeleitet werden müssen. Diese Kräfte üben dabei ein erhebliches Drehmoment auf den Rundtisch auf, so daß er sich gegenüber dem Gehäuse ungewollt verdrehen kann. Dieses wird über die Arretiereinrichtung verhindert.

Als Drehantrieb wurden ursprünglich motorisch angetriebene Schneckengetriebe verwendet. Diese hatten den Vorteil, über eine selbsthemmende Auslegung die jeweilige Winkellage des Drehelementes (Rundtisch) zu arretieren. Das Schneckengetriebe ist also gleichzeitig auch die Arretiereinrichtung gewesen.

In jüngerer Zeit ist dazu übergegangen worden, die Rundtische mit einem sogenannten Direktantrieb über einen Torquemotor, wie er zum Beispiel von der Firma Eberle angeboten wird, zu versehen. Dabei entfällt die Möglichkeit, das Drehelement über eine Selbsthemmung zu arretieren. Bei dem Werkstücktisch nach der DE 202 02 998 U1 ist deshalb eine Klemmung zwischen dem Gehäuse (Unterbau) und dem Drehelement (Rundtisch) vorgesehen. Dabei wird eine am Rundtisch angebrachte Scheibe hydraulisch geklemmt, und zwar so, daß nach Einstellen der Winkellage des Rundtisches gegenüber dem Gehäuse die Klemmung durch beaufschlagen von Hydraulikzylindern mit Druckmittel aktiviert wird.

Nachteilig bei dieser Vorgehensweise ist, daß sich die Klemmung bei einem Ausfall der Druckmittelversorgung für die Hydraulikzylinder löst. Dieses kann zu einem ungewollten Verdrehen des Rundtisches und damit zu einem Crash des Werkzeugs führen, bis hin zu einer Gefährdung von Personal durch berstende Werkzeuge und/oder Werkstücke.

Zur der DE 202 02 998 U1 ähnliche Arretiereinrichtungen sind in der US 6,457,383 B1 und der US 6,001,145 A offenbart.

Es ist zur Erhöhung der Sicherheit wünschenswert, daß die Klemmung auch bei einem Ausfall der Energieversorgung, insbesondere der Druckmittelversorgung, sicher aufrechterhalten bleibt (Fail-Save-Verhalten).

Arretierungen mit einem solchen Fail-Save-Verhaltensind prinzipiell bekannt. So zeigt die DE 195 15 085 C2 eine Arretiereinrichtung für einen Riemenantrieb. Sollte ein Antriebsriemen reißen, wird ein federbelasteter Sperrhebel verschwenkt und gerät dadurch in Eingriff mit einem Sperrad. Durch einen Zylinder läßt sich der Sperrhebel zurückschwenken und die Arretierung aufheben. Bei der in der DE 42 14 947 A1 gezeigten Arretiereinrichtung wird eine Stange oder Welle mittels Klemmhebels geklemmt. Der Klemmhebel weist eine Bohrung auf, in der die Stange oder Welle geführt ist. Durch Verschwenken des Klemmhebels wird die Bohrung exzentrisch zur Längsachse der Stange oder Welle, so daß diese geklemmt wird. Der Klemmhebel ist dabei in Klemmrichtung durch eine Feder vorgespannt und wird mittels eines Druckmittelzylinders in Freigaberichtung betätigt.

Aus der US 3,786,721 ist ein Werkstücktisch mit drehender Werkstückaufnahme, einer sogenannten Planscheibe, als Drehelement bekannt, bei dem ein umlaufender Steg an der Planscheibe mittels einer Zange geklemmt wird, um die Planscheibe zu arretieren. Die Zange ist mittels eines Hydraulikzylinders betätigbar und die geöffnete Richtung aufgrund der Vorspannung der Zange vorbelastet. Sowohl zum Öffnen, als auch zum Schließen der Zange wird diese mittels des Hydraulikzylinders betätigt. Allerdings ist offenbar aufgrund einer besonderen Gestaltung einer Exzenter-Scheibe zum Betätigen der Zange sichergestellt, daß die in Ihrer geschlossenen, also Arretierstellung, befindliche Zange sich auch bei einem Abfall des Hydraulikdrucks im Hydraulikzylinder nicht selbsttätig löst. Hierdurch ist ein gewisses Fail-Save-Verhalten gegeben.

Aus der Eingangs bereits eingeführten DE 103 19 139 A1 ist ein Werkstücktisch mit einer Planscheibe als Drehelement bekannt, bei welcher ein ringförmig ausgebildeter Bolzen in eine korrespondierende umlaufende Nut an der Planscheibe zum Arretieren derselben eingreift. Der Bolzen ist dabei in die Arretierstellung mittels einer Feder vorbelastet und kann gegen die Kraft der Feder mittels eines Hydraulikzylinders außer Eingriff mit der Nut gebracht werden, so daß die Planscheibe frei drehen kann. Die Arretiereinrichtung aus Nut und Bolzen ist also so gestaltet, daß sie im drucklosen Zustand das Drehelement fixiert. Werden Betätigungszylinder der Arretiereinrichtung mit Druckmittel beaufschlagt, wird die Arretiereinrichtung gelöst und das Drehelement kann gedreht werden. Fällt die Druckmittelversorgung aus irgendeinem Grund aus, bleibt die Arretiereinrichtung voll wirksam. Das Drehelement kann sich nicht ungewollt verdrehen.

Nachteilig bei diesem Werkstücktisch ist aber, daß aufgrund des gesonderten Druckmittelzylinders zum Betätigen des Ringbolzens der Durchmesser desselben begrenzt ist, auch wenn die gegebenen Platzverhältnisse am Werkstücktisch einen größeren Durchmesser zuließen. Damit ist auch der Hebelarm für den Ringkolben begrenzt.

Der Erfindung liegt das Problem zugrunde, einen Werkstücktisch der Eingangs genannten Art derart weiterzubilden, daß seine Arretiereinrichtung einen möglichst großen Hebelarm aufweisen kann.

Zur Lösung dieses Problems ist der erfindungsgemäße Werkstücktisch durch, die Merkmale des Anspruchs 1 gekennzeichnet.

Die feste Scheibe wird zum Fixieren des Drehelementes mittels des Rückholorgans betätigt.

Da der Ringkolben direkt mit den Druckmittel beaufschlagt ist, kann ein größt möglicher Durchmesser gewählt werden. Der Ringkolben kann außen um die Werkstückaufnahme herangeführt sein und weist so einen möglichst großen Hebelarm auf.

Als Rückholorgan dienen Federn oder die Schwerkraft. Die Betätigungsorgane sind druckmittelbetätigt. Insbesondere Hydraulik, aber auch Druckluft sind in der Regel an allen Werkzeugmaschinen verfügbar.
Der Ringkolben ist vorzugsweise aus Kunststoff gebildet und in der Ringnut preßgepaßt. Auf diese Weise sind keine gesonderten Dichtelemente für den Ringkolben erforderlich.

Einzelne Merkmale der Erfindung werden nachfolgend anhand der Zeichnung näher erläutet. Es zeigen:
Fig. 1 einen ersten Werkstücktisch im Vertikalschnitt,
Fig. 2 einen weiteren Werkstücktisch im Horizontalschnitt,
Fig. 3 den Werkstücktisch gemäß Fig. 2 in einem Schnitt in einer gegenüber Fig. 2 verdrehten Schnittebene.

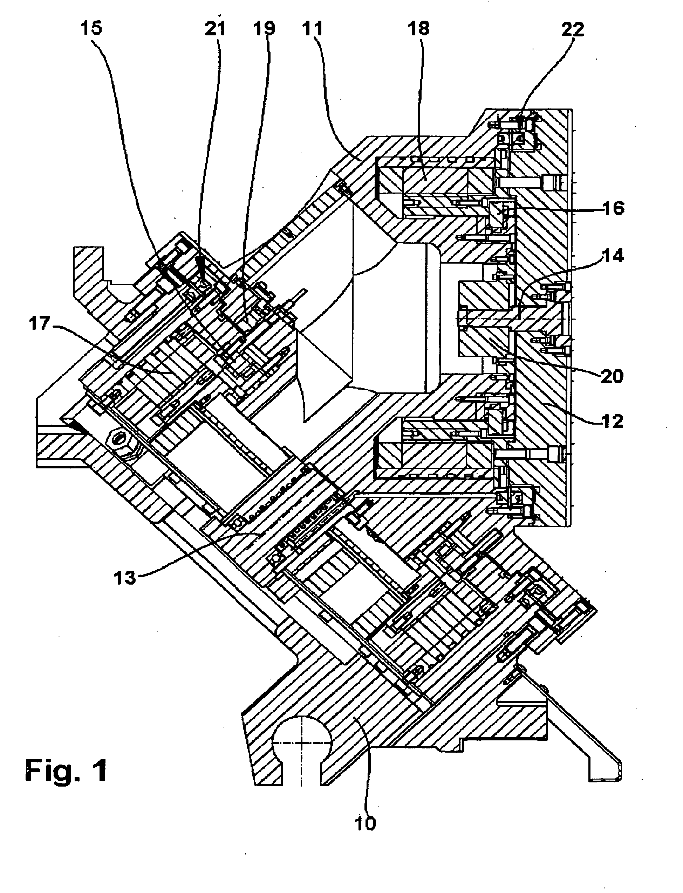

Der in Fig. 1 gezeigte Werkstücktisch weist ein Gehäuse 10 und, als ein erstes Drehelement, ein drehbar an dem Gehäuse 10 gelagertes Schwenkgehäuse 11 auf. An dem Schwenkgehäuse 11 ist, als ein weiteres Drehelement, eine Planscheibe 12 drehbar gelagert, an welcher Werkstücke in bekannter Weise zum Bearbeiten gespannt werden. Das Schwenkgehäuse 11 ist um eine erste Schwenkachse 13 gegenüber dem Gehäuse 10 und die Planscheibe 12 um eine zweite, unter einem Winkel zur ersten Schwenkachse 13 stehenden Schwenkachse 14 gegenüber dem Schwenkgehäuse 11 drehbar. An sich bekannte Drehlager 15 und 16 lagern das Schwenkgehäuse 11 am Gehäuse 10 bzw. die Planscheibe 12 am Schwenkgehäuse 11. Als Drehantrieb dient jeweils ein Torquemotor 17 bzw. 18. Die jeweilige Winkellage des Schenkgehäuses 11 zum Gehäuse 10 läßt sich über ein Meßsystem 19 erfassen. Ein weiteres Meßsystem 20 dient zum Erfassen der Drehwinkelstellung der Planscheibe 12 gegenüber dem Schwenkgehäuse 11.

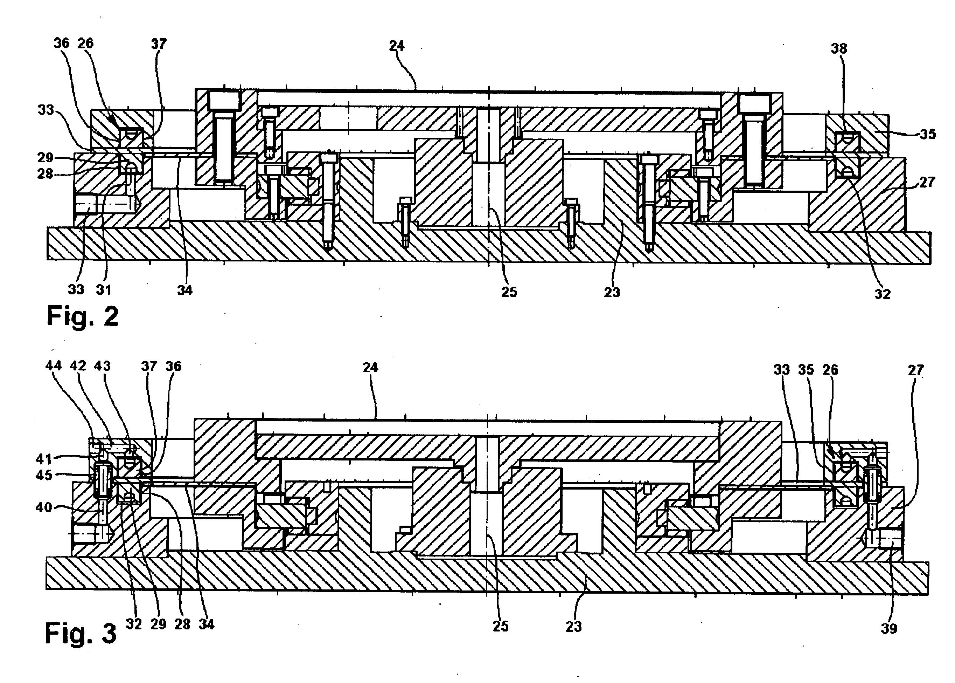

Um das Schwenkgehäuse 11 in seiner Winkellage gegenüber dem Gehäuse 10 zu fixieren, ist eine Arretiereinrichtung 21 vorgesehen. Eine weitere Arretiereinrichtung 22 dient zum Fixieren der Winkellage der Planscheibe 12 gegenüber dem Schwenkgehäuse 11. Beide Arretiereinrichtungen 21, 22 sind im Prinzip gleich ausgebildet und werden nachfolgend anhand der Fig. 2 und 3 beschrieben.

Fig. 2 und 3 zeigen einen weiteren Werkstücktisch, nämlich einen Rundtisch. Dieser weist ein Gehäuse 23 und eine Planscheibe 24 auf, welche um die Drehachse 25 drehbar an dem Gehäuse 23 gelagert ist. Die Planscheibe 24 läßt sich wieder mittels einer Arretiereinrichtung 26 gegenüber dem Gehäuse 23 fixieren. Diese Arretiereinrichtung 26 ist analog den Arretiereinrichtungen 21 und 22 für den Werkstücktisch gemäß Fig. 1 ausgebildet, so daß es ausreicht, nachfolgend nur diese Arretiereinrichtung 26 näher zu beschreiben.

An dem Gehäuse 23 ist ein Gehäusering 27 angebracht, beispielsweise geschraubt. Dieser Gehäusering 27 weist eine Ringnut 28 auf, in die ein Ringkolben 29 eingelegt ist. Der Ringkolben 29 ist aus einem Kunststoff hergestellt und weißt gegenüber der Ringnut 28 eine Preßpassung auf, so daß er selbsttätig gegen die Ringnut 28 gedichtet ist. Über eine Anschlußbohrung 30 und eine Steigleitung 31 kann ein Druckraum 32 unter dem Ringkolben 29 mit Druckmittel, konkret Hydrauliköl, beaufschlagt werden. Hierdurch wird der Ringkolben 29 aus der Ringnut herausgehoben. Hierdurch hebt der Ringkolben 29 eine feste Scheibe 33 an. Auf der Innenseite des Ringkolbens 29 ist unter der festen Scheibe 33 ein äußerer Rand einer drehenden Scheibe 34 angeordnet, die unverdrehbar mit der Planscheibe 24 verbunden ist und mit dieser mitdreht.

Im abgesenkten Zustand, wenn der Druckraum 32 unter dem Ringkolben 29 drucklos ist, klemmt die feste Scheibe 33 die drehende Scheibe 34 zwischen sich und dem Gehäusering 27. Die Planscheibe 24 ist fixiert und auf ihr gespannte Werkstücke können bearbeitet werden. Wird der Druckraum 32 mit Druckmittel beaufschlagt, hebt der Ringkolben 29 die feste Scheibe 33 an, so daß die drehende Scheibe 34 sich frei unter der festen Scheibe 33 drehen kann. Die Planscheibe 24 kann in dieser Stellung verdreht werden. Sobald der gewünschte Drehwinkel der Planscheibe 24 gegenüber dem Gehäuse 23 eingestellt ist, wird der Druck von dem Druckraum 32 abgelassen. Durch geeignete Rückholorgane senkt sich die feste Scheibe 33 ab und klemmt die drehende Scheibe 34. Geeignete Rückholorgane sind wie folgt ausgebildet:

Bei Werkstücktischen, bei denen die Scheiben 33 und 34 in einer Ebene liegen, die unter einem ausreichenden Winkel zur Schwerkraft geneigt ist, können auf der festen Scheibe 33 Gewichte, zum Beispiel in Form eines auf der festen Scheibe 33 liegenden und in geeigneter Weise mit der festen Scheibe 33 und/oder dem Gehäusering 27 verbundenen Ringes. Reicht diese Lösung nicht aus oder ist sie gar unmöglich, etwa wenn die Ebene der Scheiben 33 und 34 in Schwerkraftrichtung liegt, könne auch Rückholfedern vorgesehen sein. Hierzu ist es zum Beispiel möglich, den oben genannten Ring mit dem Ringgehäuse 27 zu verschrauben und zwischen Köpfen der Schrauben und dem Ring einerseits und/oder zwischen dem Ring und der festen Scheibe 33 andererseits Druckfedem vorzusehen.

Eine nicht zur Erfindung gehörende Variante ist in Fig. 3 gezeigt. Hier ist auf der dem Ringgehäuse 27 abgewandten Seite der festen Scheibe 33 ein Ring 35 vorgesehen und in geeigneter Weise mit dem Ringgehäuse 27 und/oder der festen Scheibe 33 verbunden. In dem Ring 35 ist auf der der festen Scheibe 33 zugewandte Seite eine Ringnut 36 vorgesehen, in der ein zweiter Ringkolben 37 eingelegt ist. Dieser Ringkolben 37 ist ebenso ausgebildet, wie der Ringkolben 29, so daß das gleiche Bauteil verwendet werden kann, was Herstellungs- und Lagerkosten minimiert. Der Ringkolben 37 ist wieder gegenüber der Ringnut 36 preßgepaßt, so daß er gegenüber der Ringnut 36 gedichtet ist.

Ein Druckraum 38 oberhalb des Ringkolbens 37 wird über Versorgungsbohrungen 39, 40, 41, 42, 43 mit Druckmittel, konkret Hydrauliköl, versorgt. Von diesen Versorgungsbohrungen 39..43, läßt sich die Versorgungsbohrung 42, wie in Fig. 2 erkennbar, nur von außen bohren. Sie ist deshalb nach außen durch einen Stopfen 44 verschlossen. Ferner sind die Versorgungsbohrungen 40 und 41 über eine Dichtungshülse 45 miteinander verbunden, um einen gedichteten Übergang durch die feste Scheibe 33 von dem Gehäusering 27 auf den Ring 35 für die Druckmittelversorgung herzustellen.

Wird der Druckraum 38 mit dem Druckmittel beaufschlagt, drückt der Ringkolben 37 die feste Scheibe 33 in Richtung auf den Gehäusering 27. Die drehende Scheibe 34 wird von der festen Scheibe 33 geklemmt. Diese Variante hat den Vorteil, daß sich die Klemmkraft über den Druck im Druckraum 38 stufenlos einstellen läßt.

Die in Fig. 3 gezeigte Variante läßt sich gut mit anderen Varianten eines Rückholelementes, insbesondere den oben beschriebenen, kombinieren und wirkt dann klemmkrafterhöhend.

### Bezugszeichenliste:

- 10: Gehäuse
- 11: Schwenkgehäuse
- 12: Planscheibe
- 13: Schwenkachse
- 14: Schwenkachse
- 15: Drehlager
- 16: Drehlager
- 17: Torquemotor
- 18: Torquemotor
- 19: Meßsystem
- 20: Meßsystem
- 21: Arretiereinrichtung
- 22: Arretiereinrichtung
- 23: Gehäuse
- 24: Planscheibe
- 25: Drehachse
- 26: Arretiereinrichtung
- 27: Gehäusering
- 28: Ringnut
- 29: Ringkolben
- 30: Anschlußbohrung
- 31: Steigbohrung
- 32: Druckraum
- 33: feste Scheibe
- 34: drehende Scheibe
- 35: Ring
- 36: Ringnut
- 37: Ringkolben
- 38: Druckraum
- 39: Versorgungsbohrung
- 40: Versorgungsbohrung
- 41: Versorgungsbohrung
- 42: Versorgungsbohrung
- 43: Versorgungsbohrung
- 44: Stopfen
- 45: Dichtungshülse

## Patentansprüche

1. Werkstücktisch mit einem Gehäuse (10, 23) und einem drehbar an dem Gehäuse (10, 23) gelagerten Drehelement (11, 12, 24) sowie einer Arretiereinrichtung (22, 23, 26) zum Fixieren der jeweiligen Drehwinkellage des Drehelementes (11, 12, 24) gegenüber dem Gehäuse (10, 23), welche bei eingeschalteter Energieversorgung mittels eines ersten Betätigungsorgans gelöst und bei abgeschalteter Energieversorgung mittels eines Rückholorgans aktiviert ist, **dadurch gekennzeichnet, dass** das Betätigungsorgan ein dichtend in einer Ringnut (28) geführter Ringkolben (29) ist, unter dem ein mit Druckmittel beaufschlagbarer Druckraum (32) angeordnet ist, wobei
• der Ringkolben (29) eine feste, gegenüber dem Gehäuse (10, 23) unverdrehbare Scheibe (33) betätigt, welche zum Fixieren des Drehelementes (11, 12, 24) mit einer drehbaren, aber gegenüber dem Drehelement (11, 12, 24) unverdrehbaren Scheibe (34), vorzugsweise über einen Hirthring, zusammenwirkt, derart, dass
• bei mit Druckmittel beaufschlagtem Druckraum (32) der Ringkolben (29) die feste Scheibe (33) anhebt, so dass die drehbare Scheibe (34) sich frei unter der festen Scheibe (33) drehen kann, und sich die feste Scheibe (33) bei aus dem Druckraum (32) abgelassenem Druckmitel durch das Rückholorgan absenkt und **dadurch** die drehbare Scheibe (34) klemmt, und dass
• das Rückholorgan ein die Schwerkraft ausnutzendes Gewicht oder wenigstens eine Feder ist.

2. Werkstücktisch nach Anspruch 1, **dadurch gekennzeichnet, daß** der Ringkolben (28) aus Kunststoff hergestellt ist und gegenüber der Ringnut (29) eine Preßpassung aufweist.

## Claims

1. Work table comprising a housing (10, 23) and a rotating element (11, 12, 24) supported for rotation on said housing (10, 23) as well as a looking means (22, 23, 26) for locking the respective position in terms of the angle of rotation of said rotating element (11, 12, 24) relative to said housing (10, 23), which, when the energy supply is turned on, is released by means of a first actuator and, when the energy supply is turned off, is activated by means of a restoring element,
**characterised in that**
said actuator element is an annular piston (29) guided with sealing effect in an annular groove (28), underneath which a pressurised space (32) is disposed that is adapted to be pressurised by means of a pressurising medium, whereby
• said actuator element operates a stationary disk (33) not capable of rotating relative to said housing (10, 23), which cooperates with a rotatable disk (34), which is not capable of rotating relative to said rotating element (11, 12, 24), preferably via a serrated ring, such that
• the annular piston (29) lifts the stationary disk (33), so that the rotatable disk (34) can freely rotate under the stationary disk (33) when the pressurised space (32) is pressurised by means of a pressurising medium, and the stationary disk lowers through the restoring element and und thereby grips the rotatable disk (34), when the pressurising medium is let out of pressurised space (32), and that
• said restoring element is a weight utilising gravity or at least a spring.

2. Work table according to Claim 1, **characterised in that** said annular piston (28) is made of a synthetic material and presents an interference fit relative to said annular groove (29).

## Revendications

1. Plateau porte-pièce comprenant un carter (10, 23) et un élément rotatif (11, 12, 24) logé pour la rotation audit carter (10, 23) ainsi qu'un moyen d'arrêt (22, 23, 26) pour arrêter la position respective en écart angulaire dudit élément rotatif (11, 12, 24) relativement audit carter (10, 23), qui, quand l'alimentation en énergie est activée, est dégagé moyennant un premier acteur et qui, quand l'alimentation en énergie est désactivée, est commandé moyennant un élément de rappel, **caractérisé en ce**
**que** ledit acteur est un piston annulaire (29) guidé, à étanchéité, dans une rainure annulaire (28), au-dessous de laquelle un espace sous pression (32) est disposé, qui est apte à être mis en pression moyennant un milieu de pressurisation, de telle sorte que
• le piston annulaire (29) commande un disque stationnaire (33) non capable de tourner relativement audit carter (10, 23), qui coopère avec un disque rotatif (34) non capable de tourner relativement audit élément rotatif (11, 12, 24), de préférence via un anneau cranté Hirth, de manière que
• lorsque l'espace sous pression (32) est mis en pression moyennant un milieu de pressurisation, le piston annulaire (29) soulève le disque stationnaire (33) de sorte que le disque rotatif (34) peut se tourner librement sous le disque stationnaire (33), et que le disque stationnaire (33) se baisse à travers l'élément de rappel et grippe le disque rotatif (34) lorsque le milieu de pressurisation est dégorgé de l'espace sous pression (32), et que
• ledit élément de rappel est un poids utilisant la force de pesanteur ou au moins un ressort.

2. Plateau porte-pièce selon la revendication 1, **caractérisé en ce que** ledit piston annulaire (28) est fait en un matériau synthétique et présente un ajustement sans jeu relativement à ladite rainure annulaire (29).
